# EUROPEAN PATENT APPLICATION

(11) **EP 2 477 371 A2**
(43) Date of publication of application: **18.07.2012**
(21) Application number: 10815024.4
(22) Date of filing: 12.08.2010
(51) Int. Cl.: H04L 29/06

(54) **SYSTEM FOR THE DEFINITION AND APPLICATION OF SECURELY ACCESSIBLE GEOGRAPHICAL AREAS**

(30) Priority: 11.09.2009 ES 200930683
(71) Applicant: Telefónica, S.A., 28013 Madrid (ES)
(72) Inventor: LÓPEZ GARCÍA, José Enrique, E-28013 Madrid (ES); BRAVO FERNÁNDEZ, María del Rocio, E-28013 Madrid (ES); GARCÍA GARCÍA, Laura, E-28013 Madrid (ES); MARTÍN GARZÓN, Oscar, E-28013 Madrid (ES); MUÑOZ ORGANERO, Pedro Luis, E-28013 Madrid (ES)
(74) Representative: Carpintero Lopez, Francisco
(86) International application number: PCT/ES2010/070552
(87) International publication number: WO 2011/029972

(57) **Abstract**

The present invention relate to a method and a system applicable to telecommunications systems, providing an additional guaranteeing factor of the identity provided by a user when
he/she accesses a service provider based on the coincidence of the location of the user when the latter is carrying a device
susceptible to being located 10 by means of GSM, GPRS, UMTS, WIFI and GPS technologies, with at least one zone of reliable access
associated with said user.

## Description

### Object of the Invention

As expressed in the title of this specification, the present invention relates to a method and a system which adds a guaranteeing factor of the identity of a user when said user accesses a service provider requiring authentication, being applicable to telecommunications systems and particularly to systems where the user by means of connecting his/her mobile telephone terminal with the telecommunications network accesses the service provider.

Said guaranteeing factor of the identity of the user is based on determining if the current location of the user seeking access to the service is in a geographic zone previously defined as being of reliable access.

### Background of the Invention

Deciding whether or not a presented identity is reliable when a user accesses a service is, in its essence, simply a question of trust, i.e., trust in the system of authentication used. This is because the main problem for systems of authentication is that it precisely cannot be considered that any of them assure, one hundred percent, that the presented identity actually corresponds to the user who is trying to access the resource.

Currently, systems of authentication are essentially based on three authentication factors, which are:
- Those based on something that the user knows: a password;
- Those based on something that the user has: a digital certificate;
- Those based on something that the user is: the digital fingerprint or voice pattern (biometry);

Therefore, all the systems of authentication using the same authentication factor have similar security characteristics. The more authentication factors that are used by systems of authentication, the greater the difficulty in spoofing the presented identity. Therefore, a system using the three classes of factors (factor-3 authentication) is more reliable than one using only two (factor-2), which in turn is more reliable than a factor-1 mechanism.

Systems of authentication can use infinite authentication factors that can be grouped into the three authentication factors described above. So each of said systems of authentication can consist of a set of factors such as 'what the user knows', which can be represented, for example, by F11 to F1 N, N being a natural number comprised between 0 and infinite, a set of factors such as 'what the user has', which can be represented, for example, by F21 to F2N, N being a natural number taking values from 0 onwards, and a set of factors such as 'what the user is', which can be represented, for example, by F31 to F3N, N being a natural number taking values from 0 onwards. The user must present the characteristics required by each of the methods of authentication implemented in the various types of factor so that it can use them to validate the identity of the user.

From the viewpoint of trust, the more trust associated with a specific authentication factor, the more reliable the system of authentication which it is part of is. Therefore, factors based on something that the user knows stopped being considered reliable some time ago. In turn, those based on something the user has have trust limited to how easy or difficult the loss, abandonment or copy thereof is (for the specific case of tokens). Finally, those based on a physiological characteristic of the user are not always sufficiently developed in a technological manner to be considered reliable. An example of biometric authentication is BioWallet® (http://biowallet.net) which uses iris recognition and written signature as mechanisms of biometric authentication.

Systems of authentication based on what the user knows are usually very inexpensive consistent with the little security they offer; however, any of the other two have important penetration barriers under the form of specific costs.

Therefore, systems of authentication based on factors requiring proof of being in possession of something involve having an infrastructure dedicated to determining whether or not someone is indeed in possession of what is required, and whether or not it is a copy. For example, digital certificates need a deployed PKI infrastructure in order to be used.

In turn, systems of authentication based on physiological characteristics of the user require specific devices that can measure the characteristic in question of the actual user behind the access petition, which in turn entails the cost of taking these devices to the points from where the user normally accesses (his/her home or public access rooms).

Mechanisms of authentication based on knowing something (a password), in addition to the security problem they suffer, have the drawback of depending on the user remembering a password. Today, with the proliferation of virtual identities of the users on the Internet, this is starting to be a problem of usability itself. Furthermore, in the increasingly more frequent accesses from mobile devices, entering passwords is uncomfortable due to the type of keypads used.

In turn, the use of tokens or certificates (authentication based on something one has) requires, first, having a warehouse for storing or saving them once they are received to subsequently be able to use them. Secondly, the user must be familiar with the use thereof, because in the specific case of digital certificates this also entails a problem as it is a complex technology.

Finally, authentication based on biometric mechanisms almost always requires considerable collaboration from the user (position of part of his/her body, lighting, retries, etc.), in addition to going through a first registration phase which is usually quite repetitive.

It would therefore be interesting for mechanisms of authentication to invade the habits of users as little as possible, and for their use to be very simple or, by default, as automatic as possible.

It therefore seems desirable to find mechanisms of authentication which use reliable factors but with a low deployment cost or, in any case, which make use of infrastructures already deployed for other functions.

Once solution is user authentication based on user location. Location technologies are divided into indoor and outdoor location, an example in the state of the art for outdoor location can be found in: "Ana Bernardos. *Tecnologías de Localización.* Universidad Carlos III for the Centro de Difusión de Tecnologias ETSIT-UPM. December 2003".

Some examples of indoor location technologies are those based on WiFi, Ultra Wideband, Bluetooth or RFID, and their main feature is the presence of a network of local sensors, with a reduced zone of action (usually less than 5 meters), installed particularly for capturing signals from devices equipped with transmitters of this type of signal, and subsequently applying some type of algorithm determining their location. An example of indoor location can be found in the state of the art in "Raúl Sánchez Vítores. Sistemas de Localización en Interiores. December 2005: http://www.coit.es/publicaciones/bit/bit148/57-59.pdf".

In turn, the main outdoor location technologies are reduced to:
- Based on satellite technologies, such as GPS (Global Positioning System). A specific receiver (a GPS receiver, for example) uses signals sent by a set of satellites for calculating their position by applying mathematical algorithms such as the trilateration technique.
- Based on cellular technologies, such as GSM (Global System for Mobile Communications), which is the most widespread standard for mobile telephones incorporating digital technology in Europe. These technologies divide the territory into a set of cells, the size of which depends on the nature of the surroundings (rural or urban). One of the specific characteristics of GSM is that it has a native functionality of location registers (HLR, VLR), where information about the location of the terminal in the form of location zones (set of cells where a specific mobile terminal is located) is stored. This also determines the precision of the location, which is reduced to the size of the cells.

There are also attempts to use WiFi technology for the outdoor location of devices of this type, such as the SkyHook Wireless® WPS system (http://www.skyhookwireless.com/) where software in the device stores a database of WiFi points of a geographic zone which the actual device then uses to locate itself. Nevertheless, since it continues to depend on the presence of WiFi coverage points, its penetration is not yet relevant.

Outdoor location is based on mathematical principles and theorems modeling the shape of the Earth. Like any model, it is a simplification of the actual object that is useful for being used as a basis for establishing a spatial reference system. There are three basic models:
- Spherical earth model. Earth is considered a sphere with an approximate radius of 6,371,000 meters.
- Earth model with a geoid shape. Earth is considered a quasi-spherical shaped but deformed body. It is an equipotential surface of the gravitational field, approximately coinciding with the mean level of the oceans.
- Earth model with an ellipsoid shape. An ellipsoid is the simplest figure fitting the shape of the Earth. It is the three-dimensional shape generated by the rotation of an ellipse about its shortest axis. This axis approximately coincides with the Earth's axis of rotation.

The spherical Earth model approach is the most intuitive and simplest approach. Once the model is selected, the calculation of the distance between two points of the Earth's surface must be based on a mathematical principle or theorem which facilitates the task. The method chosen for such effect fundamentally depends on the separation which, *a priori,* is estimated to exist between the points the distance of which is to be found. For small distances, the most precise technique is the Pythagorean theorem (available, for example, in González Urbaneja, P. M. Pythagoras. El filósofo del número. Nivola. Madrid, 2001); however, this method commits in errors for large distances because it does not take into account the effects of convergence of the meridians and the curvature of the parallels characteristic of the Earth's surface. In contrast, if it is estimated that the separation will be large, the method having the best results is the Haversine algorithm (R. W. Sinnott, Virtues of the Haversine, Sky and Telescope, 1984). Since it is difficult to predict the separation distance between two points, the most suitable method because of its degree of accuracy and its validity (from the mathematical viewpoint) regardless of the magnitude of the distance is that based on the use of the trigonometric relations imposed by the principles of spherical trigonometry (available, for example, in Ma Asunción Iglesias Martín. Trigonometría Esférica. Teoría y problemas resueltos. Escuela Náutica, 2004).

An example of authentication by means of location is CyberLocator® (http://www.lbszone.com/index2.php?option=com_content&do_pdf=1 &id=1144). Cyber Locator® uses signals from the GPS system of the client to form a complex and changing signature that never repeats. This signature is processed by a protected server which determines from it the geospatial and time attributes of the remote client to determine the right to access a protected data. Remote accesses from unregistered sites or regions will be blocked by the server. Participation of the user accessing the service is therefore not necessary because this functionality is completely transparent for him/her.

Other mobile security solutions include the location of the device for tracking it and thus being able to know its location (for example, in the event of loss or theft). This is the case of the Maverick Secure Mobile® (MSM) application (http://www.maverickmobile.in/maverick/msm.jsp), which allows tracking a stolen mobile device and recovering the contacts or disabling the device, all in a remote manner.

Therefore, there continues to be a problem of trust and security in relation to systems of authentication.

### Description of the Invention

To achieve the objectives and prevent the drawbacks indicated above, the invention consists of a method and a system providing an additional authentication factor, thus increasing the security level of the system incorporating it.

The novel system of the present invention comprises at least one geographic zone management module, an authentication module and a location module. These novel modules comprise the means necessary for their interconnection with other modules of the state of the art and with one another. The authentication module of the invention also offers the additional possibility of being included in other authentication modules of the state of the art, thus giving them an additional authentication factor and increasing the security thereof.

The geographic zone management module of the invention comprises at least one means of treating the location data, means of managing the enlisting or registration, modification and cancellation of the geographic zones of reliable access and a graphic interface which in turn comprises means of displaying the geographic zone of reliable access and means of displaying and capturing information.

Said geographic zone management module of the invention is managed by means of the graphic interface according to am architecture selected from user-centric and service-centric.

A user-centric architecture is an architecture centered on the user, which gives the end user complete freedom to handle its reliable geographic zones: he/she can register the desired reliable geographic zones, subject only to the restrictions imposed by the service provider (if there are any). Furthermore, he/she can change or eliminate the data associated with the reliable geographic zones already registered, with the exception of the information relating to location.

A service-centric architecture is an architecture centered on the service provider, it is said service provider which predefines and handles the reliable geographic zones for each user. Depending on the type of service offered, the reliable zones which best fit the scenario are established. Once the zones are established, the service provider can choose one of the following variants:
o Make the end user a participant in the process of provision of his/her reliable geographic zones and allow him/her to choose, from those already predefined by the service provider, a sub-set of them as the only ones to be taken into account in the process of authentication.
o Maintaining the process of provision of geographic zones in a manner transparent to the end user, such that the latter is completely unrelated with both the registration and the possible modifications that can be made on the reliable geographic zones he/she has assigned.

The authentication module comprises at least one means of connecting and exchanging data with at least one standard authentication means, means compatible with the standard authentication means for integration thereof in said standard authentication means and means of connecting and exchanging data with a service provider.

The location module comprises at least one means of executing at least one mathematical location algorithm selected from Pythagoras, Haversine and spherical trigonometry, a database, means of connecting and exchanging data with at least one specific location means, means of connecting and exchanging data with the geographic zone management module and the authentication module, and a graphic administration interface.

The specific location means locates the user with identifier ID by means of at least one of the options selected from GSM, GPS, WiFi, GPRS and UMTS. Likewise, said specific location means define the location of the user with identifier ID by means of an option selected from a location zone and a location point associated with an error.

The method of authentication of the invention introduces an authentication factor as a guaranteeing element of the identity of a user with an identifier ID associated therewith. Said authentication factor are the geographic zones of reliable access stored in the system by means of the method of the invention in which the user with identifier ID is a participant.

As a step prior to the method of authentication of the invention, it is checked that the identity of the user corresponds with the identifier ID. This check belongs to the state of the art.

The novel method of authentication of the invention by means of geographic zones of reliable access comprises performing the following steps in the authentication module:
i) sending a request for verification of a user with identifier ID associated therewith to a location module, said location module returning a response to the authentication module made up of at least one location Boolean parameter and a security level associated with said location Boolean parameter, where the location Boolean parameter represents the location of the user with identifier ID with respect to at least one geographic zone of reliable access associated with said user with identifier ID, and where the security level represents the error rate associated with the location Boolean parameter; and,
ii) analyzing the at least one location Boolean parameter and the security level associated with said location Boolean parameter to establish a value of an authentication Boolean parameter, said value of the authentication Boolean parameter being "true" when the user with identifier ID is authenticated, and "false" when the user with identifier ID is not authenticated.

To carry out step ii) described above, it is necessary to check the communication. To that end, step ii) of the method of the invention additionally comprises checking the communication between the authentication module and the location module; setting the value of the authentication Boolean parameter to "false" when at least one option selected from the location Boolean parameter being "false" and the existence of a error in the communication between the authentication module and the location module is met; extracting the value of the security level associated with the location Boolean parameter from the response of the location module when the value of the location Boolean parameter is "true" and no error has occurred in the communication between the authentication module and the location module, and applying a predetermined security criterion, establishing the value of the authentication Boolean parameter; and adding attributes to the user with identifier ID when the value of the authentication Boolean parameter is "true".

Step i) of the novel method of the invention additionally comprises receiving the request for verification of user with identifier ID to the location module from the authentication module; obtaining data of the user with identifier ID by means of a query in a database contained in the location module; obtaining, from the data of the user, the number of geographic zones of reliable access associated with said user with identifier ID registered in the database contained in the location module; setting the value of the location Boolean parameter to "false" when the number of geographic zones of reliable access associated with said user with identifier ID is zero; extracting all the reliable geographic zones associated with the user with identifier ID from the database located in the location module when the obtained number of geographic zones of reliable access associated with said user with identifier ID is greater than zero; obtaining the location of the user with identifier ID, sending a request for a specific location solution which returns location data selected from a location zone and a location point associated with its error when the obtained number of geographic zones of reliable access associated with said user with identifier ID is greater than zero; treating the location data obtained from the specific location solution to adapt it to the suitable format when the obtained number of geographic zones of reliable access associated with said user with identifier ID is greater than zero; executing at least one predetermined verification algorithm the result of which comprises the at least one location Boolean parameter associated with its security level and at least one alphanumeric location code when the obtained number of geographic zones of reliable access associated with said user with identifier ID is greater than zero; and sending the at least one location Boolean parameter associated with its security level and, optionally, the at least one alphanumeric location code to the authentication module.

To establish the value of the at least one location Boolean parameter and of the security level associated therewith, the mathematical location algorithms calculate basically two parameters, at least one of them being sufficient to determine previous values, i.e., the value of the location Boolean parameter and the security level associated therewith. The first parameter is the distance between the location point associated with its error of the user associated with his/her identifier ID and the central point of the geographic zone of reliable access associated with the user with identifier ID. If the distance is less than a predetermined threshold, the location Boolean parameter takes the value "true" and the security level takes the value "HIGH". The second parameter is the number of cutoff points between the location zone and the geographic zone of reliable access associated with the user with identifier ID, the location Boolean parameter taking the value "true" and the security level takes the value "LOW" when there is at least one cutoff point. However, the value "false" is assigned to the location Boolean parameter when the distance between the location point associated with its error of the user with identifier ID and the central point of the geographic zone of reliable access associated with the user with identifier ID is at least equal to the predetermined threshold. The value "false" is also assigned to the location Boolean parameter when there is no cutoff point between the location zone of the user with identifier ID and the geographic zone of reliable access associated with the user with identifier ID. The value "false" is assigned to the location Boolean parameter and the value "LOW" to the associated security level when the user with identifier ID does not have any geographic zone of reliable access associated with the user with identifier.

The geographic zones of reliable access associated with each user with identifier ID are stored in the database and managed by the geographic zone management module. Said module is capable of performing the registration or enlisting, the modification and cancellation of the geographic zones of reliable access associated with the user with identifier ID. The management of said geographic zones of reliable access can be done by means of a type of architecture selected from user-centric architecture and service provider-centric architecture, there being in both cases the user with identifier ID and a user administrator responsible for managing the data contained in the database. In the case of user-centric architecture, user with identifier ID and user administrator coincide. In the case of service provider-centric architecture, user with identifier ID and user administrator are different.

To modify and cancel at least one geographic zone of reliable access associated with a user with identifier ID, the geographic zone management module of reliable access of the invention comprises, for any of the architectures defined above, the user administrator selecting the option of consulting the geographic zones of reliable access associated with the user with identifier ID in a menu; consulting the geographic zones of reliable access associated with said user with identifier ID stored in the database; checking the number of geographic zones of reliable access associated with said user with identifier ID; showing an error message when the number of geographic zones of reliable access associated with said user with identifier ID is zero; showing a message with all the geographic zones of reliable access associated with said user with identifier ID, when the number of geographic zones of reliable access associated with said user with identifier ID is greater than zero; asking the user administrator if he/she wants to examine the characteristics of at least one of the geographic zones of reliable access associated with said user with identifier ID; returning to the previous step if the desire of the user administrator is negative; showing the characteristics of the at least one geographic zone of reliable access associated with said user with identifier ID and desired by same, by means of a form which allows modifications; asking the user administrator if he/she wants to eliminate the at least one geographic zone of reliable access associated with said user with identifier ID; updating the database eliminating the at least one geographic zone of reliable access associated with said user with identifier ID when the desire of the user administrator is affirmative; checking if the user administrator wants to modify the at least one geographic zone of reliable access associated with said user with identifier ID when the desire of the user administrator is negative; checking if the modifications of the at least one geographic zone of reliable access associated with said user with identifier ID are valid when the user administrator wants to modify the at least one geographic zone of reliable access associated with said user with identifier ID; updating the database with the changes made in at least one attribute of the at least one geographic zone of reliable access associated with said user with identifier ID when the user administrator wants to modify the at least one geographic zone of reliable access associated with said user with identifier ID; showing the final result of managing the modification or cancellation, including an error message when the modifications of the at least one geographic zone of reliable access associated with said user with identifier ID are not valid.

To register or enlist a geographic zone of reliable access associated with a user with identifier ID, the geographic zone management module of reliable access of the invention comprises, for any of the architectures defined above, sending a user location request to the location module for the user with identifier ID; consulting the number of geographic zones of reliable access associated with the user with identifier ID; checking if the position of the user with identifier ID coincides with at least one of the geographic zones of reliable access associated with the user with identifier ID; showing an error message to the user administrator when the position of the user with identifier ID coincides with at least one of the geographic zones of reliable access associated with the user with identifier ID; showing geographic characteristics of the current location of the user with identifier ID which are registered in the database as geographic attributes of the at least one geographic zone of reliable access associated with the user with identifier ID to the user administrator when the user with identifier ID has no geographic zone of reliable access associated with the user with identifier ID registered in the database or when the current position of the user does not coincide with any of the geographic zones of reliable access associated with the user with identifier ID registered in the database; the user administrator adding complementary attributes of the at least one geographic zone of reliable access associated with the user with identifier ID; creating the at least one geographic zone of reliable access associated with the user with identifier ID and requesting confirmation of said creation from the user administrator; storing the at least one geographic zone of reliable access associated with the user with identifier ID in the database; showing an information message of the enlisting or registration to the user administrator.

### Brief Description of the Drawings

Figure 1 shows a block diagram of a system of authentication of the state of the art.
Figure 2 shows a flow diagram of a method of authentication of the state of the art.
Figure 3 shows the infinite factors which an entity (1) can have when it requests access (2) to a system (3).
Figure 4 shows part of the system of the present invention necessary for providing said additional authentication factor based on the geographic zones of reliable access associated with a user with an identifier ID.
Figure 5 shows the basic steps of the method of the present invention.
Figure 6 shows the sub-steps included within the first step of the novel method of the present invention.
Figure 7 shows the sub-steps included within the second step of the novel method of the present invention.
Figure 8 shows the petitions generating both the user with identifier ID and the different modules to carry out the different tasks.
Figure 9 shows the steps of the method of the present invention when the user administrator wants to register the current location of the user as a reliable geographic zone.
Figure 10 shows the steps of the method of the present invention when the user administrator wants to consult or eliminate any of the reliable geographic zones associated with the user with identifier ID.

### Description of an Embodiment of the Invention

A description of several implementation examples of the invention will be made below making reference to the reference numbers used in the figures.

Systems of authentication implement methods of authentication which, together with systems of identification and systems of authorization, form the set of methods implementing access control systems for regulating, granting or denying petitions of an entity (typically a user through a mobile telephone terminal) concerning resource consumption in a telecommunications network:
- In identification, the user somehow presents his/her identity to the access control system.
- In authentication, the user demonstrates or proves to the access control, by means of a mechanism, that that identity actually does represent him/her and is not being spoofed by a third party.
- In authorization, once the identity of the user has been authenticated, the access control verifies that said user has the permissions necessary to consume the protected resource.

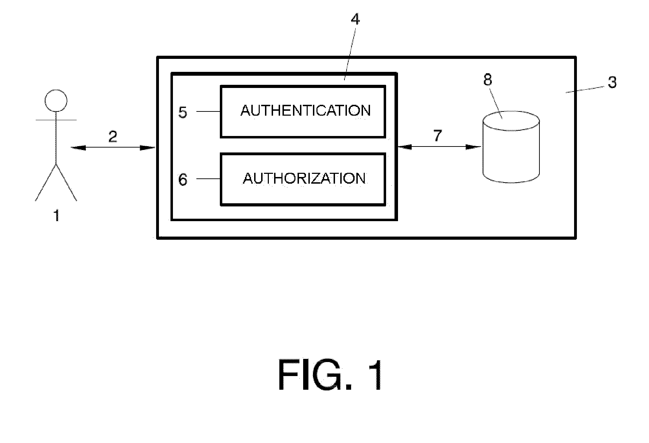

Figure 1 shows a block diagram of a system of authentication of the state of the art. Generically, an entity or user (1) requests access (2) to a system (3), which includes an access control module (4). This module is made up of two elements executing the processes of authentication (5) and authorization (6). The process of authentication is responsible for deciding whether or not access of the entity to the system should be allowed. On the other hand, the process of authorization checks, once the entity has been authenticated, if the entity has the privileges necessary to reach (7) the requested resource (8).

In the state of the art there are numerous solutions facilitating the incorporation of access control to resources of a specific computerized information or telecommunication system. An example can be found in the *Java Authentication and Authorization Service®* (JAAS) interface (available at http://java.sun.com/javase/technologies/security/), which provides mechanisms for providing security to Java® applications by means of access control services comprised in, for example, the access control module (4). JAAS offers the possibility of creating authentication chains (method of authentication whereby authentication mechanisms are sequentially linked to one another to improve the final guarantee of authenticity of the user), implemented by third parties using the system object of the invention (typically web applications).

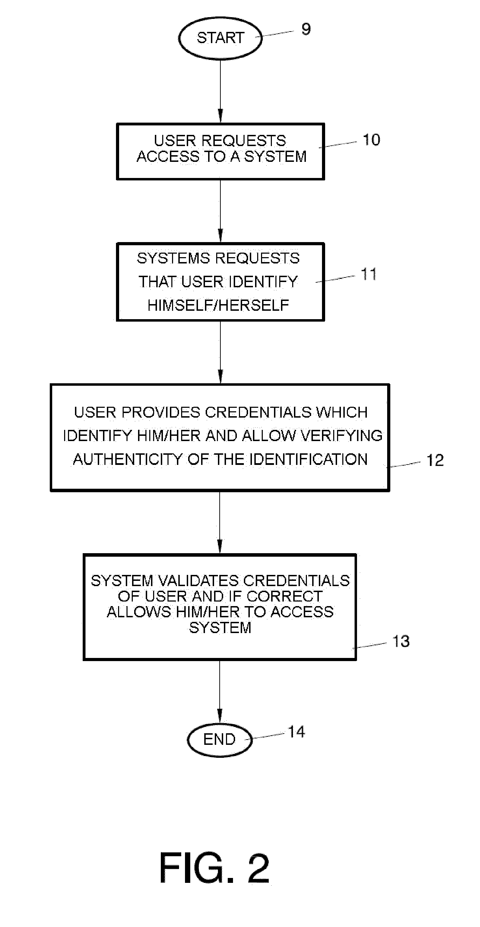

Figure 2 shows a flow diagram of a method of authentication of the state of the art. Generally, the basic steps of said method of authentication are: the method (9) is initiated, the user requests access to the system (10), the system requests the user to authenticate himself/herself (11), the user provides the credentials which identify him/her and allow verifying the authenticity of the identification (12), and the system subsequently validates, according to its rules, whether or not the credentials provided are sufficient to grant access to the user (13), the method of authentication thus ending (14).

Methods of authentication are based on authentication factors which determine the security of the system of authentication.

Figure 3 shows the infinite factors which an entity (1) can have when it requests access (2) to a system (3). Said factors can be grouped into the three authentication factors described above. Therefore, each of the said systems of authentication can consist of a set of factors such as 'what the user knows' (15), which are represented by F11 to F1N, N being a natural number comprised between 0 and infinite, a set of factors such as 'what the user has' (16), which are represented by F21 to F2N, N being a natural number taking values from 0 onwards, and a set of factors such as 'what the user is' (17), which are represented by F31 to F3N, N being a natural number taking values from 0 onwards. Taking into account that a system which uses the three classes of factors is a factor-3 system, that a system which uses only two is a factor-2 type system, and that a system which uses only one factor is a factor-1 type system, the system of the present invention is a factor-2 type system.

The present invention provides an additional authentication factor in the process of authentication, thus increasing the security level of the system of the present invention, and optionally in other systems which incorporate it in, for example, their access control module.

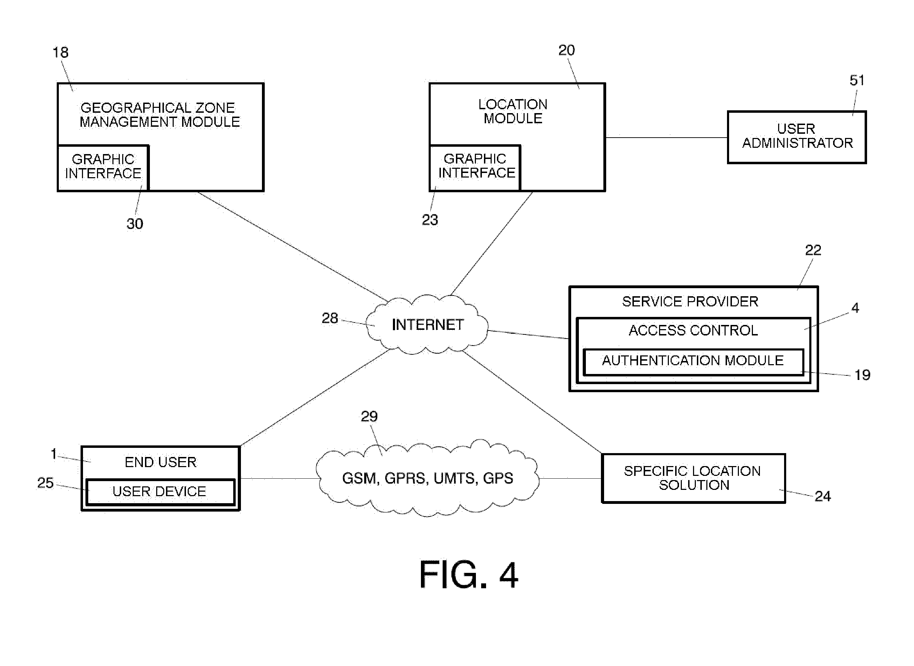

Figure 4 shows part of the system of the present invention necessary for providing said additional authentication factor based on the geographic zones of reliable access associated with a user (1) with an identifier ID. The system comprises a geographic zone management module (18), an authentication module (19) and a location module (20). Said authentication module (19) is comprised in an access control module (4) which in turn is comprised in a service provider (22). Additionally, the geographic zone management module (18) comprises a graphic interface (26) for managing the geographic zone management module (18) by a user administrator (27). As can be seen in Figure 4, the different modules forming the system can be connected to one another directly in a centralized configuration or over the Internet (28) in a distributed configuration. However, the user (1) is located by means of his/her user device (25) which is connected to an option selected from GSM, GPRS, UMTS type cellular networks and the like, Wifi and GPS (29) by means of the GPS complement necessary for such purpose.

In the first embodiment of the invention and continuing with the elements shown in Figure 4, the specific location solution (24) uses the GSM cellular network (29), being completely similar and extensible to GPRS and UMTS as well as to GPS with minor differences that will later be explained. A user-centric architecture is chosen because it gives the user (1) complete freedom to administer his/her geographic zones of reliable access. The authentication module (19) is a JAAS type module, which enables chain integration with other standard authentication modules, such as that based on user name and password. The geographic zone management module (18) is a web application type module with a graphic interface (30) accessible over the Internet. The location module (20) is a web application module without a graphic interface accessible over the Internet. Therefore, the user (1) is located by the geographic location of the mobile device (25) he/she is carrying. The mobile terminal (25) is connected to the GSM, GPRS, UMTS or GPS network (29), containing in this last case a specific GPS signal receiver module. It should be pointed out that if the location is performed through GPS technology, the specific location solution (24) interacting with the selected location technology (29) would not be an independent element, but a component included in the location web application which would be communicated with the GPS receiver of the mobile device to obtain the location of the user. The user device (25) also has a connection to Internet by means of WiFi access or using the cellular network (29) as a gateway. It should be pointed out that the interaction of all the modules takes place through the Internet network or any other type of network (28).

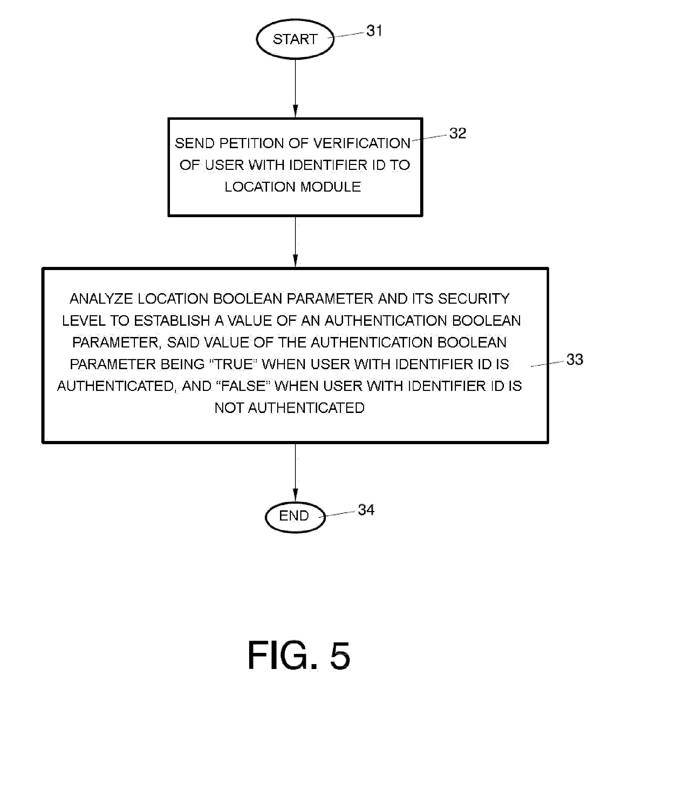

Figure 5 shows the basic steps of the method of the present invention. Once the user has connected to a service provider by means of his/her mobile device, and after a standard process of identification by means of the ID of the user and prior to the process of authorization, the JAAS type authentication module only needs the ID of the user as an input parameter to be able to thus initiate (31) the method of authentication by means of geographic zones of reliable access of the invention.

The first step (32) of the method of authentication by means of geographic zones of reliable access in the JAAS type authentication module comprises sending a request for verification of a user with identifier ID associated therewith to the web application of the location module, said web application of the location module returning a response to the JAAS type authentication module made up of a location Boolean parameter associated with its security level, the location Boolean parameter representing the probability that the user with identifier ID is located in at least one geographic zone of reliable access associated with said user with identifier ID, and its security level representing the reliability of said location Boolean parameter, i.e., it represents how secure the location Boolean parameter is taking into account the technology used by the specific location solution and the errors associated therewith.

The second step (33) is to analyze the location Boolean parameter and the security level associated with said location Boolean parameter to establish a value of an authentication Boolean parameter, said value of the authentication Boolean parameter being "true" when the user with identifier ID is authenticated, and "false" when the user with identifier ID is not authenticated, thus ending (34) with the basic steps making up the method of the present invention.

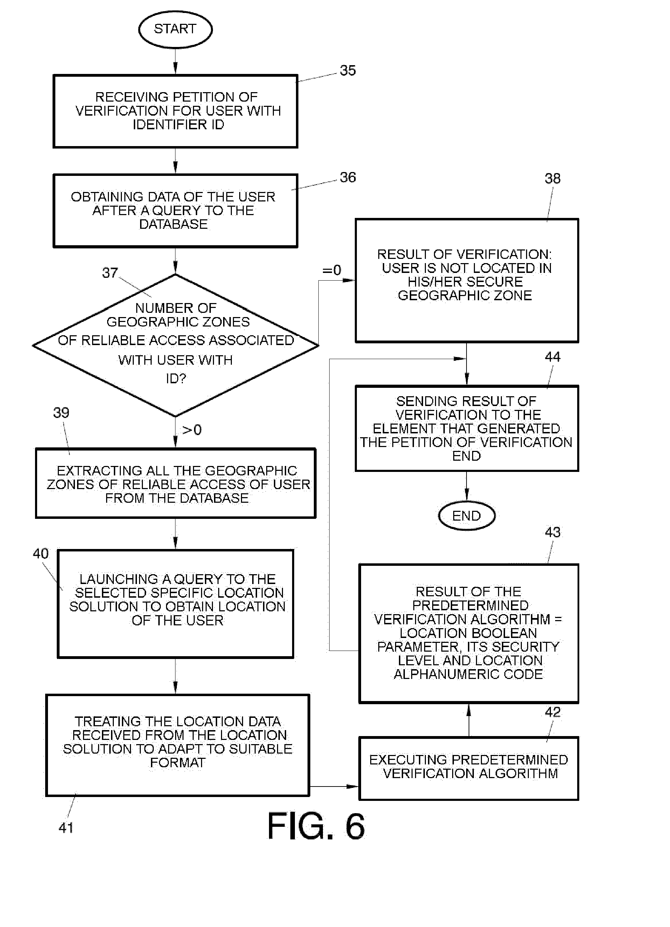

Figure 6 shows the sub-steps included within the first step of the novel method of the invention, which additionally requires receiving the request for verification of user with identifier ID (35) from the web application of the location module formed by a set of Java® servlets (http://java.sun.com/products/servlet/), each of which is responsible for handling the petitions received, from the web application of the authentication module. Then the data of the user with identifier ID is obtained by means of a query in the database contained in the location module (36). Then the number of geographic zones of reliable access associated with said user with identifier ID registered in the database contained in the location module (37) and the characteristics defining them is obtained from the data of the user. The value of the location Boolean parameter is set to false when the number of geographic zones of reliable access associated with said user with identifier ID is zero (38). All the reliable geographic zones associated with the user with identifier ID are extracted from the database located in the location module when the obtained number of geographic zones of reliable access associated with said user with identifier ID is greater than zero (39). Subsequently, if the obtained number of geographic zones of reliable access associated with said user with identifier ID is greater than zero, the location of the user with identifier ID is obtained, sending a request forthe specific location solution which returns location data selected from a location zone and a location point associated with its error (40). Given that the user location is identified with the location of the mobile device he/she has, the specific location solution uses the GSM, GPRS or UMTS cellular network to locate the mobile devices connected to this network. In the case of GPS technology, the GPS receiver included in the mobile device is used. The servlet receiving the petitions of location of users performs the following sub-steps:
- Associating the ID of the user with his/her mobile telephone number, the result of which is the 'msisdn', by means of a query in the location database. This is necessary only for GSM, GPRS and UMTS location technologies.
- Establishing a communication channel with the GSM location solution to send a request for location of the 'msisdn'. This is necessary only for GSM, GPRS and UMTS location technologies. For GPS, the communication link is established with the GPS receiver of the mobile terminal making use of the libraries necessary for establishing this link.
- Receiving and interpreting the data sent in the response coming from the location solution or from the GPS receiver.
- Extracting the data from the response received which are to be incorporated into the response that the servlet generates. This data is the coordinates of the central point of the zone returned by the GSM/GPRS/UMTS location solution, the coordinates of the point with the lowest probability of error of finding the mobile terminal within the zone, as well as information defining the shape of the zone. For GPS technology, the zone is formed by the point provided by the GPS receiver.

After the sub-steps performed by the location servlet, it continues with the sub-steps included within the first step of the novel method of the invention. If the obtained number of geographic zones of reliable access associated with said user with identifier ID is greater than zero, this data is adapted to the format of the data specified in the interface of the location web application, specifically, converting the geographic coordinates in sexagesimal format to decimal format and sending the response constructed by the servlet as a response to the request for location of user with identifier ID (41). Subsequently, the predetermined verification algorithm is executed (42) within a servlet developed for that purpose and the result of which (43) comprises the location Boolean parameter associated with its security level, and optionally an alphanumeric location code which represents additional information about the execution of the predetermined verification algorithm. Said predetermined verification algorithm returns a response such that if the user has registered reliable geographic zones, they are iterated and each is checked to see if the point with the highest probability of finding the user in the zone returned by the GSM/GPRS/UMTS location solution or the point provided by the GPS receiver are included, in which case said response comprises a "true" and "HIGH" result for the Boolean parameter and its security level, respectively. If this condition is not met, it is tested to see if both zones (the reliable geographic zone and the GSM/GPRS/UMTS/GPS location zone) intersect. If this supposition is met, then the result of the process is "true" for the location Boolean parameter but the security level is "LOW". On the other hand, if the user does not have geographic zones of reliable access, the result of the process of verification is "false" for the location Boolean parameter and "LOW" for the security level associated with said parameter.

The alphanumeric code which is optionally enclosed in the response of verification is a numeric code in which the following values are contemplated:
- 100 - LOCATED
- 200 - NOT_LOCATED
- 300 - INVALID_ID
- 400 - WITHOUT_SECURE_ZONES
- 500 - LOCATION_ERROR

Finally, the location Boolean parameter associated with the alphanumeric location code is sent to the authentication module (44).

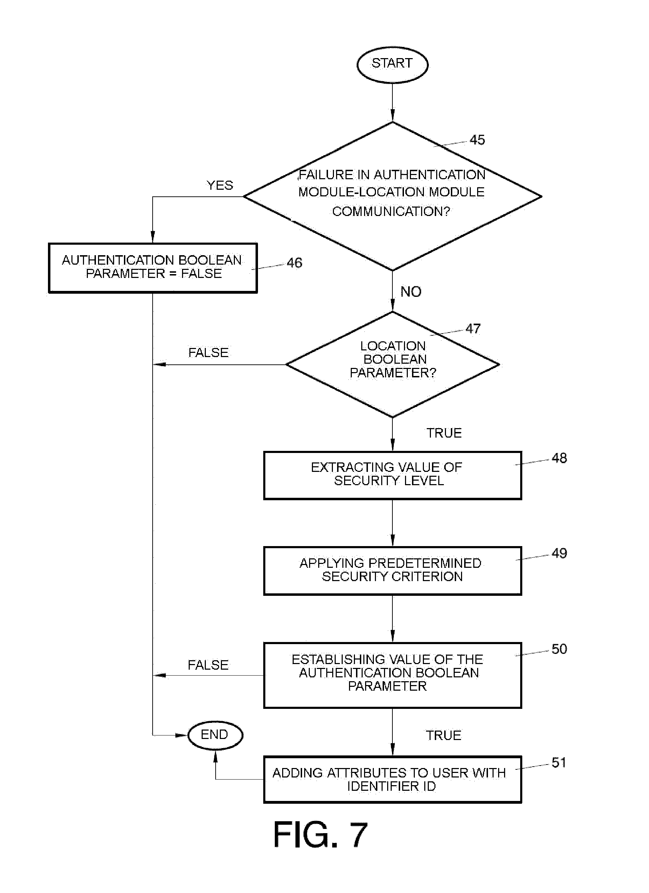

Figure 7 shows the sub-steps included within the second step of the novel method of the invention, which additionally comprises checking the communication (45) of the authentication module with the web application of the location module, the authentication Boolean parameter establishing the value "false" (46) when there is a failure in communication. Then the value of the location Boolean parameter (47) is extracted. If said location Boolean parameter has the value "false" the process ends, and if it has the value "true" the value of the security level (48) is extracted and by applying a predetermined security criterion (49), the value of the authentication Boolean parameter (50) is established. If said value of the authentication Boolean parameter is "false" the process ends, and if it is "true" attributes are added to the user with identifier ID (51).

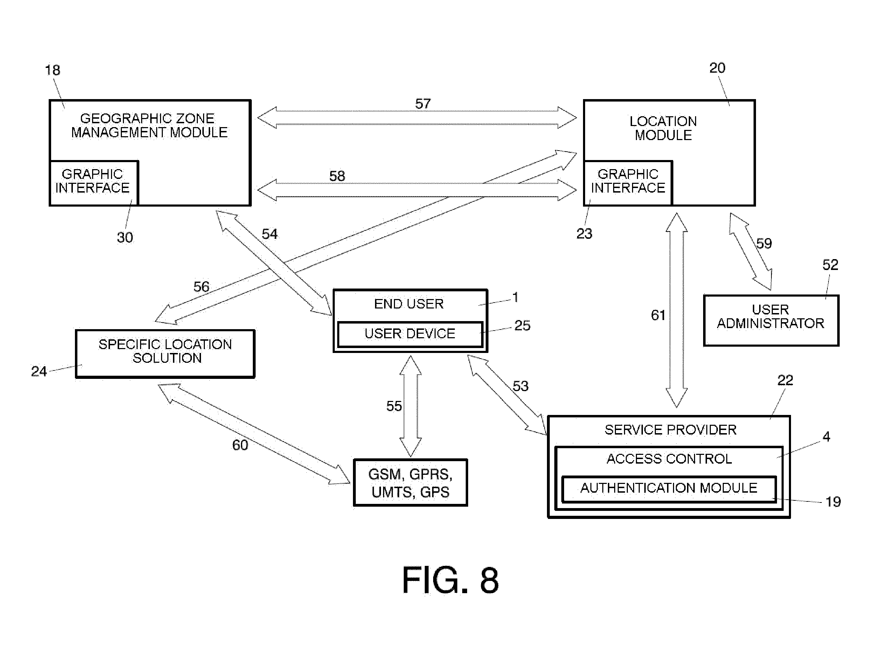

Figure 8 shows the petitions generated by both the user (1) with identifier ID and the different modules to carry out the different tasks. All user-module (53, 54, 55) and module-module (56-61) petitions are performed over the Internet. Through said connection with Internet, the user with identifier ID may access the web application of the geographic zone management module (18), in which he/she will administer his/her reliable geographic zones acquiring the role of user administrator. The geographic zones of reliable access associated with each user (1) with identifier ID are stored in the database (23) and managed by means of said web application of the geographic zone management module (18). By means of said module, the user (1) is capable of registering or enlisting, modifying and cancelling the geographic zones of reliable access associated with said user with identifier ID. When the user with identifier ID wants to be registered (53) in a service provider (22), the request can be handled by the user administrator (52) of the location web application (20), which can send the pertinent request for provision to this application (54). The imposition of a prior request to the user for his/her consent to use his/her location data depends on the privacy requirements imposed by the specific location solution (24), which is outside the scope of the present invention. The end user with identifier ID thus knows at all times that the system will make use of the information concerning his/her geographic location, therefore guaranteeing the principles of privacy. In this specific scenario, it would be necessary to enclose in this petition the ID of the end user and his/her mobile telephone number (if GSM, GPRS or UMTS is used as location technology).

Once the process of enlisting has ended, the end user with identifier ID will be invited to access the geographic zone management web application so that he/she defines his/her first geographic zone of reliable access. It is necessary for the user to have at least one reliable geographic zone so that the authentication algorithm can be run in the location web application in future processes: logically, if an end user does not have any assigned reliable geographic zone, he/she will never be successfully authenticated.

The web application of the geographic zone management module (18) offers a web type graphic interface (30) so that the end user (1) with identifier ID can administer his/her geographic zones of reliable access.

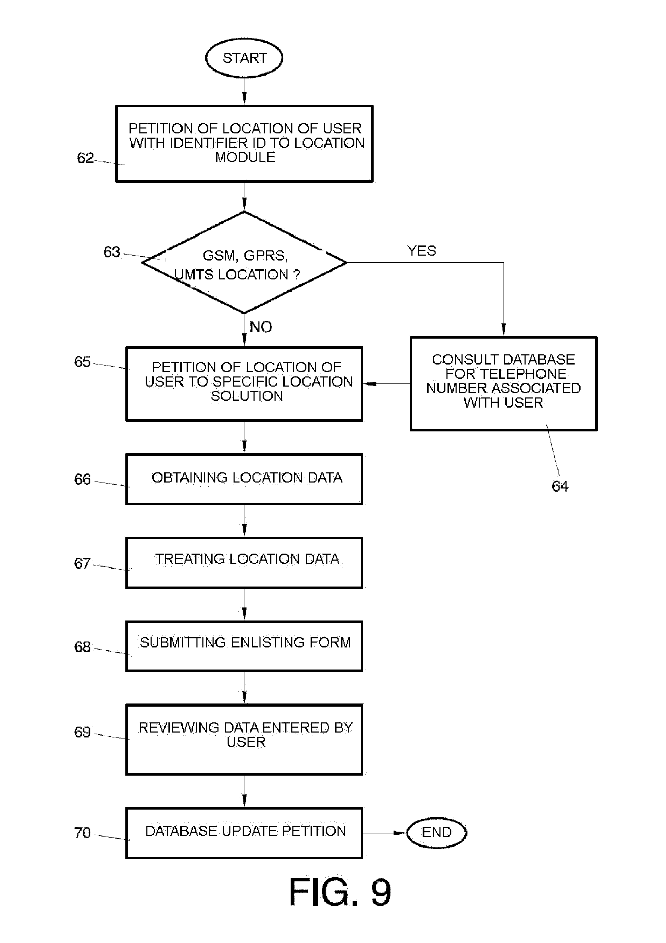

Figure 9 shows the steps of the method of the present invention when the user administrator (52) wants to register the current location of the user (1) as a reliable geographic zone. The selection of this registration option triggers:
o A request for location of the user to the location web application (62). The ID of the user is provided in this petition.
o A query (64) from the location web application to the location database for extracting the mobile telephone number associated with the user with the ID provided. This step (64) would only be necessary if the location technology is GSM, GPRS or UMTS (63).
o A request for location of the user (65) from of the location web application to the specific location solution (only for GSM, GPRS or UMTS technology) (56, Figure 8). For GPS technology, the geographic zone management web application must redirect the browser of the user terminal to the location web application so that the latter can establish communication with the GPS of the device and extract the location of the user.
o Obtaining (66) the location data provided by the GSM/GPRS/UMTS specific location solution or by the GPS receiver of the mobile terminal. The location web application examines this data and extracts that information to be provided as the coordinates of the point with the lowest probability of error of finding the user.
o Subsequently, this data is adapted to the suitable format (67) (coordinate system, metric systems and predefined state codes) and sends it as a response.
   Once the geographic zone management web application receives this location data, it decides the value of the radius of the new reliable geographic zone depending on the precision offered by the selected location technology, i.e., greater radius at a lower precision.
o It subsequently shows (68) the end user a zone enlisting form so that he/she can complete the required fields with the characteristics extrinsic to the location data that are requested in a compulsory manner (name to assign to the new reliable geographic zone) and in an optional manner (brief description associated with the reliable geographic zone). The intrinsic location data, i.e., coordinates of the central point of the geographic zone, are displayed on a map but cannot be manipulated by the end user.
o Once the user fills out and sends the form, the data entered is reviewed (69) by reliable zone management web application logic and if they are correct (consistent with the expected data format).
o Finally, a location database update petition (70) is generated to include this new reliable geographic zone and associate it with the end user that has performed the operation.

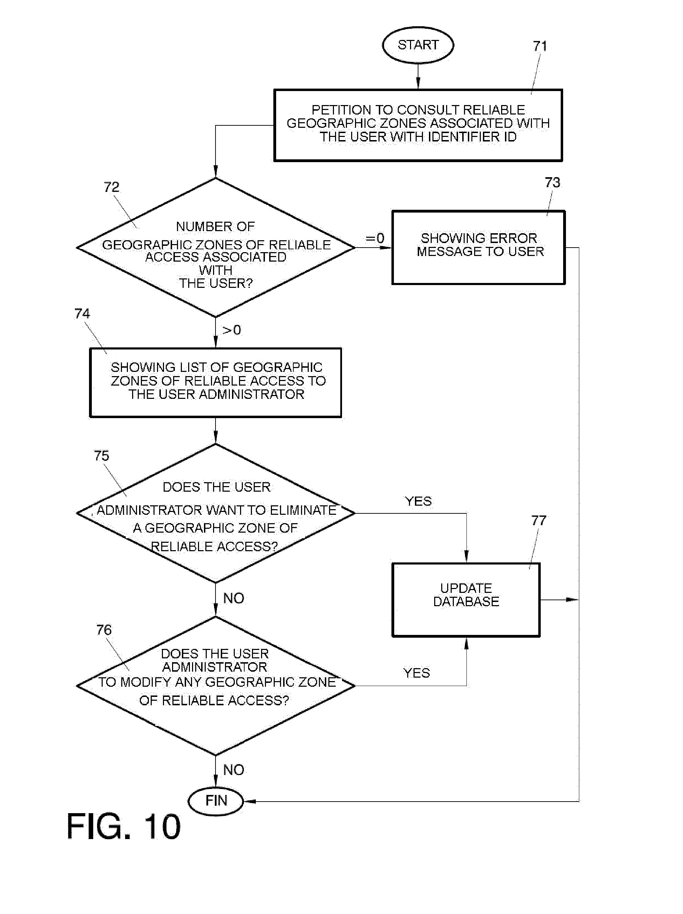

Figure 10 shows the steps of the method of the present invention when the user administrator (52) wants to consult or eliminate any of the reliable geographic zones associated with the user (1) with identifier ID. This choice provokes a selection petition (71) to the location database to obtain all the reliable geographic zones of the user whose ID is provided. The database returns the number of registered zones with reliable access associated with the user with identifier ID. If the number is equal to zero, an error message (73) is shown and the method ends. If the number is greater than zero, these zones are displayed in a list (74), it being possible to eliminate (75) or modify (76) any of its entries. If one of these two actions is performed, the changes are reflected (77) in the location database. In the case of modification, only characteristics extrinsic to the location data, i.e., the name of the zone and its description, can be modified.

Since the data is sensitive, access to this management web application must be restricted, so prior authentication such as that based on user name and password credentials, is proposed. This process of authentication can be delegated in an identity manager that is responsible for user and access control administration.

### Second Embodiment of the Invention

The second embodiment of the invention is completely similar to the first, except that it uses a service-centric architecture. In other words, it is the service provider that defines the geographic zones of reliable access of the user, it being a completely transparent process for the user. The deployment diagram is identical to that shown in Figure 8, except now the petition 54 is substituted with a new petition between the modules 18 and 22. Therefore, it is only necessary to briefly explain this subtle difference existing between the two scenarios.

Through a connection with the Internet, the service provider may access the geographic zone management web application (18), where it can administer the reliable geographic zones of all the users who are registered and make use of the service offered by the service provider (22). The service provider therefore becomes the user administrator. The service provider registers users who want to use the service in the location web application by means of a method completely similar to that defined by means of the steps of the first embodiment of the invention when the user administrator (52) wants to register the current location of the user (1) as a reliable geographic zone.

Once the enlisting process ends, the service provider may define for each user the desired geographic zones of reliable access through the graphic interface offered by the geographic zone web application management in the same way as in the method defined by the steps of the first embodiment of the invention when the user administrator (52) wants to modify or eliminate any of the reliable geographic zones associated with the user (1) with identifier ID.

## Claims

1. Method of authentication by means of geographic zones of reliable access which comprises performing the following steps in an authentication module:
i) sending a request for verification of a user with identifier ID associated therewith to a location module, said location module returning a response to the authentication module made up of at least one location Boolean parameter and a security level associated with said location Boolean parameter, where the location Boolean parameter represents the location of the user with identifier ID with respect to at least one geographic zone of reliable access associated with said user with identifier ID, and where the security level represents the reliability of the location Boolean parameter;
ii) analyzing the at least one location Boolean parameter and the security level associated with said location Boolean parameter to establish a value of an authentication Boolean parameter, said value of the authentication Boolean parameter being "true" when the user with identifier ID is authenticated, and "false" when the user with identifier ID is not authenticated.

2. Method of authentication by means of geographic zones of reliable access according to claim 1, **characterized in that** step ii) additionally comprises:
• checking the communication between the authentication module and the location module;
• setting the value of the authentication Boolean parameter to "false" when at least one option selected from the location Boolean parameter being "false" and the existence of an error in the communication between the authentication module and the location module is met;
• extracting the value of the security level associated with the location Boolean parameter from the response of the location module when the value of the location Boolean parameter is "true" and no error has occurred in the communication between the authentication module and the location module, and applying a predetermined security criterion, establishing the value of the authentication Boolean parameter; and,
• adding attributes to the user with identifier ID when the value of the authentication Boolean parameter is "true".

3. Method of authentication according to claim 1, **characterized in that** step i) additionally comprises:
a) receiving the request for verification of user with identifier ID to the location module from the authentication module;
b) obtaining data of the user with identifier ID by means of a query in a database contained in the location module;
c) obtaining, from the data of the user, the number of geographic zones of reliable access associated with said user with identifier ID registered in the database contained in the location module;
d) setting the value of the location Boolean parameter to "false" when the number of geographic zones of reliable access associated with said user with identifier ID is zero;
e) extracting all the reliable geographic zones associated with the user with identifier ID from the database located in the location module when the obtained number of geographic zones of reliable access associated with said user with identifier ID is greater than zero;
f) obtaining the location of the user with identifier ID, sending a request for a specific location solution which returns location data selected from a location zone and a location point associated with its error when the obtained number of geographic zones of reliable access associated with said user with identifier ID is greater than zero;
g) treating the location data obtained from the specific location solution to adapt it to the suitable format when the obtained number of geographic zones of reliable access associated with said user with identifier ID is greater than zero;
h) executing at least one predetermined verification algorithm the result of which comprises the at least one location Boolean parameter associated with its security level and at least one alphanumeric location code when the obtained number of geographic zones of reliable access associated with said user with identifier ID is greater than zero; and,
i) sending the at least one location Boolean parameter associated with its security level and, optionally, the at least one alphanumeric location code to the authentication module.

4. Method of authentication by means of geographic zones of reliable access according to claim 3, **characterized in that** the at least one predetermined verification algorithm comprises:
• calculating, by means of at least one mathematical location algorithm, at least one of the following parameters:
o the distance between the location point associated with its error of the user with identifier ID and the central point of the geographic zone of reliable access associated with the user with identifier ID and comparing said distance with a predetermined threshold;
o the cutoff points between the location zone of the user with identifier ID and the geographic zone of reliable access associated with the user with identifier ID;
• assigning the value "true" to the location Boolean parameter and the value "HIGH" to the security level associated with the location Boolean parameter when the distance between the location point associated with its error of the user with identifier ID and the central point of the geographic zone of reliable access associated with the user with identifier ID is less than the predetermined threshold;
• assigning the value "true" to the location Boolean parameter and the value "LOW" to the security level associated with the location Boolean parameter when there is at least one cutoff point between the location zone of the user with identifier ID and the geographic zone of reliable access associated with the user with identifier ID;
• assigning the value "false" to the location Boolean parameter when the distance between the location point associated with its error of the user with identifier ID and the central point of the geographic zone of reliable access associated with the user with identifier ID is at least equal to the predetermined threshold;
• assigning the value "false" to the location Boolean parameter when there is no cutoff point between the location zone of the user with identifier ID and the geographic zone of reliable access associated with the user with identifier ID;
• assigning the value "false" to the location Boolean parameter and the value "LOW" to the security level associated when the user with identifier ID does not have any geographic zone of reliable access associated with the user with identifier ID.

5. Method of authentication by means of geographic zones of reliable access according to claim 3, **characterized in that** the at least one geographic zone of reliable access associated with the user with identifier ID and contained in the database defined in step b) is managed by a geographic zone management module by means of an option selected from registration or enlisting, modification and cancellation, and by means of a type of architecture selected from user-centric architecture and service provider-centric architecture, there being in both cases the user with identifier ID and a user administrator responsible for managing the data contained in the database; in the case of user-centric architecture, user with identifier ID and user administrator coincide; in the case of service provider-centric architecture, user with identifier ID and user administrator are different.

6. Method of authentication by means of geographic zones of reliable access according to claim 5, **characterized in that** step b) additionally comprises, for managing the at least one geographic zone of reliable access associated with the user with identifier ID according to the architecture selected from user-centric architecture and service provider-centric architecture, the following steps for managing modification and cancellation:
• the user administrator selecting the option of consulting the geographic zones of reliable access associated with the user with identifier ID in a menu;
• consulting the geographic zones of reliable access associated with said user with identifier ID stored in the database;
• checking the number of geographic zones of reliable access associated with said user with identifier ID;
• showing an error message when the number of geographic zones of reliable access associated with said user with identifier ID is zero;
• showing a message with all the geographic zones of reliable access associated with said user with identifier ID when the number of geographic zones of reliable access associated with said user with identifier ID is greater than zero;
• asking the user administrator if he/she wants to examine the characteristics of at least one of the geographic zones of reliable access associated with said user with identifier ID;
• returning to the previous step if the desire of the user administrator is negative;
• showing the characteristics of the at least one geographic zone of reliable access associated with said user with identifier ID and desired by same, by means of a form which allows modifications;
• asking the user administrator if he/she wants to eliminate the at least one geographic zone of reliable access associated with said user with identifier ID;
• updating the database eliminating the at least one geographic zone of reliable access associated with said user with identifier ID when the desire of the user administrator is affirmative;
• checking if the user administrator wants to modify the at least one geographic zone of reliable access associated with said user with identifier ID when the desire of the user administrator is negative;
• checking if the modifications of the at least one geographic zone of reliable access associated with said user with identifier ID are valid when the user administrator wants to modify the at least one geographic zone of reliable access associated with said user with identifier ID;
• updating the database with the changes made in at least one attribute of the at least one geographic zone of reliable access associated with said user with identifier ID when the user administrator wants to modify the at least one geographic zone of reliable access associated with said user with identifier ID;
• showing the final result of managing the modification or cancellation, including an error message when the modifications of the at least one geographic zone of reliable access associated with said user with identifier ID are not valid.

7. Method of authentication by means of geographic zones of reliable access according to claim 5, **characterized in that** step b) additionally comprises, for managing the at least one geographic zone of reliable access associated with the user with identifier ID according to the architecture selected from user-centric architecture and service provider-centric architecture, the following steps for managing registration or enlisting:
• sending a user location request to the location module for the user with identifier ID;
• consulting the number of geographic zones of reliable access associated with the user with identifier ID;
• checking if the position of the user with identifier ID coincides with at least one of the geographic zones of reliable access associated with the user with identifier ID;
• showing an error message to the user administrator when the position of the user with identifier ID coincides with at least one of the geographic zones of reliable access associated with the user with identifier ID;
• showing geographic characteristics of the current location of the user with identifier ID which are registered in the database as geographic attributes of the at least one geographic zone of reliable access associated with the user with identifier ID to the user administrator when the user with identifier ID has no geographic zone of reliable access associated with the user with identifier ID registered in the database or when the current position of the user does not coincide with any of the geographic zones of reliable access associated with the user with identifier ID registered in the database;
• the user administrator adding complementary attributes of the at least one geographic zone of reliable access associated with the user with identifier ID;
• creating the at least one geographic zone of reliable access associated with the user with identifier ID and requesting confirmation of said creation from the user administrator;
• storing the at least one geographic zone of reliable access associated with the user with identifier ID in the database;
• showing an information message of the enlisting or registration to the user administrator.

8. System of authentication by means of geographic zones of reliable access comprising at least:
• a geographic zone management module;
• a authentication module; and,
• a location module.

9. System of authentication by means of geographic zones of reliable access according to claim 8, **characterized in that**:
• the geographic zone management module comprising at least:
○ a graphic interface comprising at least:
■ means of displaying at least one geographic zone of reliable access;
■ means of displaying and capturing information;
○ means of treating location data;
○ means of managing the enlisting or registration, modification and cancellation of the at least one geographic zone of reliable access;
• the authentication module comprising at least:
o means of connecting and exchanging data with at least one standard authentication means;
o means compatible with the at least one standard authentication means for integration thereof in said at least standard authentication means;
o means of connecting and exchanging data with at least one service provider;
• the location module comprising at least:
o means of executing at least one mathematical location algorithm;
o a database;
o means of connecting and exchanging data with at least one specific location means;
o means of connecting and exchanging data with at least the geographic zone management module and the authentication module;
o a graphic administration interface.

10. System of authentication by means of geographic zones of reliable access according to claim 9, **characterized in that** the specific location means locates a user with identifier ID by means of at least one of the options selected from GSM, GPS, WiFi, GPRS and UMTS.

11. System of authentication by means of geographic zones of reliable access according to claim 10, **characterized in that** the specific location means define the location of the user with identifier ID by means of at least one option selected from a location zone and a location point associated with an error.

12. System of authentication by means of geographic zones of reliable access according to claim 9, **characterized in that** the at least one mathematical location algorithm is selected from Pythagoras, Haversine and spherical trigonometry.
